# EUROPEAN PATENT SPECIFICATION

(11) **EP 3 986 016 B1**
(45) Date of publication and mention of the grant of the patent: **20.08.2025**
(21) Application number: 20202220.8
(22) Date of filing: 16.10.2020
(51) Int. Cl.: H04W 24/10

(54) **REPORTING MINIMIZATION OF DRIVING TEST MEASUREMENTS**
BERICHTERSTATTUNGSMINIMIERUNG VON FAHRPRÜFUNGSMESSUNGEN
RAPPORT DE MINIMISATION DE MESURES DE TEST DE CONDUITE

(43) Date of publication of application: 20.04.2022
(73) Proprietor: Nokia Technologies Oy, 02610 Espoo (FI)
(72) Inventor: KOVACS, Istvan, 9000 Aalborg (DK); PANTELIDOU, Anna, 91300 Massy (FR)
(74) Representative: Mudge, Kevin

(56) References cited:
- US-A1- 2014 099 940
- HUAWEI ET AL: "Corrections on MDT stage-2 descriptions", vol. RAN WG2, no. electronic; 20200817 - 20200828, 7 August 2020 (2020-08-07), XP051912377, Retrieved from the Internet <URL:https://ftp.3gpp.org/tsg_ran/WG2_RL2/TSGR2_111-e/Docs/R2-2007750.zip R2-2007750 Corrections on MDT stage-2 descriptions.docx> [retrieved on 20200807]
- NOKIA: "Rel-17 CR 32.422 Fix inconsistencies in NR positioning method", vol. SA WG5, no. Online; 20201012 - 20201021, 2 October 2020 (2020-10-02), XP051938865, Retrieved from the Internet <URL:https://ftp.3gpp.org/tsg_sa/WG5_TM/TSGS5_133e/Docs/S5-205111.zip S5-205111 - Rel-17 CR 32.422 Fix inconsistencies in NR positioning method.doc> [retrieved on 20201002]
- "3rd Generation Partnership Project; Technical Specification Group Core Network and Terminals; Evolved Packet System (EPS); Mobility Management Entity (MME) and Serving GPRS Support Node (SGSN) related interfaces based on Diameter protocol (Release 16)", vol. CT WG4, no. V16.4.0, 24 September 2020 (2020-09-24), pages 1 - 177, XP051960932, Retrieved from the Internet <URL:ftp://ftp.3gpp.org/Specs/archive/29_series/29.272/29272-g40.zip 29272-g40.docx> [retrieved on 20200924]
- "3 Generation Partnership Project; Technical Specification Group Radio Access Network; Universal Terrestrial Radio Access (UTRA), Evolved Universal Terrestrial Radio Access (E-UTRA) and Next Generation Radio Access; Radio measurement collection for Minimization of Drive Tests (MDT); Overall descripti", vol. RAN WG2, no. V16.2.0, 5 October 2020 (2020-10-05), pages 1 - 34, XP051961388, Retrieved from the Internet <URL:ftp://ftp.3gpp.org/Specs/archive/37_series/37.320/37320-g20.zip 37320-g20.docx> [retrieved on 20201005]

## Description

### TECHNOLOGICAL FIELD

The present disclosure relates generally to the field of wireless communications. Some examples relate to reporting Minimization of Driving Test (MDT) measurements. Certain examples, though without prejudice to the foregoing, relate to using MDT measurements for User Equipment (UE) tracking in a Next Generation (NG) Radio Access Network (RAN).

### BACKGROUND

In the conventional MDT framework, two types of MDT measurements can be performed, namely: Logged MDT and Immediate MDT. Immediate MDT requires configuration at the UE using RRC messages. Immediate MDT may additionally allow detailed UE location information reporting, e.g. a UE's Global Navigation Satellite System (GNSS) location information, such as its GPS position.

Area Scope is an optional parameter in a conventional MDT configuration message that defines the area(s) in which MDT measurements are to be performed. The Area Scope is defined by *Area Configuration* IE of the MDT configuration message (see TS 38.331). The *AreaConfiguration* IE indicates the coverage area(s), i.e. cells or tracking areas of a RAN, wherein the UE is requested to perform MDT measurement logging and/or reporting. If the Area Scope is not configured, measurement logging is not restricted to specific cells or tracking areas but instead measurement logging occurs as long as the Registered Public Land Mobile Network (RPLMN) is contained in a *plmn-IdentityList* stored in a *VarLogMeasReport.*

Typically, the Areas Scope may comprise a list of: cell IDs, Tracking Area Codes (TAC) or Tracking Area Identifiers for defining the area(s) in which MDT measurements are to be performed. The Area Scope may be configured to the NG-RAN and the UE may be configured to perform MDT measurements every time the UE determines that is has entered and/or is currently in an area (such as a particular cell) that is defined in the Area Scope. For example, a UE may perform MDT measurements each time it enters a cell having a cell ID corresponding to a cell ID of the Area Scope.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

US2014099940 A1 relates to a method and apparatus for efficiently controlling a minimization of drive test (MDT) in a plurality of public land mobile networks (PLMNs). The method for controlling an MDT of a terminal comprises the steps of: performing a tracking-area update; receiving a logged measurement configuration message; determining whether or not the received logged measurement configuration message comprises an MDT PLMN list; and applying, if the MDT PLMN is comprised, the MDT PLMN list to the MDT.

HUAWEI ET AL, "Corrections on MDT stage-2 descriptions", vol. RAN WG2, no. electronic; 20200817 - 20200828, (20200807), 3GPP DRAFT; R2-2007750, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE. This discloses an MDT PLMN List for indicating the PLMNs where measurement collection and log reporting is allowed. It is either the Management Based MDT PLMN List or the Signalling Based MDT PLMN List, depending on how the Logged MDT task was initiated. This also discloses configuration of a logging area. A UE will log measurements as long as it is within the configured logging area. The scope of the logging area may consist of one of: a list of up to 32 global cell identities (if this list is configured, the UE will only log measurements when camping in any of these cells); and a list of up to 8 TAs or 8 LAs or 8 Ras (if this list is configured, the UE will only log measurements when camping in any cell belonging to the preconfigured TA/LA/Ras).

NOKIA, "Rel-17 CR 32.422 Fix inconsistencies in NR positioning method", vol. SA WG5, no. Online; 20201012 - 20201021, (20201002), 3GPP DRAFT; S5-205111, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE. This discloses NG-RAN activation mechanisms for management based MDT data collections without IMSI/IMEI(SV)/SUPI selection in the case of non-split architecture.

### BRIEF SUMMARY

The scope of protection sought for various embodiments of the invention is set out by the independent claims.

Currently, the definition of Area Scope is inflexible and limited simply to indicating cells, i.e. cell ID's, in which a UE may perform MDT measurements. However, a cell's coverage area can be geographically very irregular in practice due to radio propagation conditions. Thus, such a cell ID based Area Scope definition is not suitable for precise geo-fencing particularly where a geofencing area is to span geo-areas smaller than one cell (e.g. within a building), or spans particular geo-areas covered partly by several cells.

In some circumstances it may be desirable to increase the flexibility and/or granularity of an area, that is defined based in part on an Area Scope, in which MDT measurements are to be performed and reported. In some circumstances it may be desirable to provide adaptive control/triggering of the reporting (and possibly performing) of MDT measurements, including UE location (e.g. GNSS coordinates) with a finer spatial granularity, while minimizing the required signaling load to effect the same. In some circumstances it may be desirable to provide enhanced MDT-based UE tracking for UE's associated with/built into Unmanned Aerial Vehicles (UAVs).

Any examples/embodiments and features described in this specification that do not fall under the scope of the independent claims are to be interpreted as examples useful for understanding various embodiments of the invention.

According to at least some examples of the disclosure there is provided a User Equipment, UE, comprising
means for receiving, from a node of a Radio Access Network, RAN, configuration information for configuring the UE to perform Minimization of Driving Test, MDT, measurements, wherein the configuration information comprises:
   coverage information for indicating a plurality of coverage areas in the RAN, and
   triggering information for indicating whether reporting of MDT measurements is to be triggered based in part on whether the coverage areas of the plurality of coverage areas are detected by the UE:
      sequentially in a given order, or
      simultaneously; and
means for reporting MDT measurements based in part on the configuration information.

According to various, but not necessarily all, examples of the disclosure there is provided a method comprising:
receiving, at a User Equipment, UE, from a node of a Radio Access Network, RAN, configuration information for configuring the UE to perform Minimization of Driving Test, MDT, measurements, wherein the configuration information comprises:
   coverage information for indicating a plurality of coverage areas in the RAN, and
   triggering information for indicating whether reporting of MDT measurements is to be triggered based in part on whether the coverage areas of the plurality of coverage areas are detected by the UE:
      sequentially in a given order, or
      simultaneously; and
reporting MDT measurements based in part on the configuration information.

According to various, but not necessarily all, examples of the disclosure there is provided computer program instructions for causing an apparatus to perform:
receiving, at a User Equipment, UE, from a node of a Radio Access Network, RAN, configuration information for configuring the UE to perform Minimization of Driving Test, MDT, measurements, wherein the configuration information comprises:
   coverage information for indicating a plurality of coverage areas in the RAN, and
   triggering information for indicating whether reporting of MDT measurements is to be triggered based in part on whether the coverage areas of the plurality of coverage areas are detected by the UE:
      sequentially in a given order, or
      simultaneously; and
reporting MDT measurements based in part on the configuration information.

According to various, but not necessarily all, examples of the disclosure there is provided an apparatus comprising:
at least one processor; and
at least one memory including computer program instructions;
the at least one memory and the computer program instructions configured to, with the at least one processor, cause the apparatus at least to perform:
   receiving, at a User Equipment, UE, from a node of a Radio Access Network, RAN, configuration information for configuring the UE to perform Minimization of Driving Test, MDT, measurements, wherein the configuration information comprises:
      coverage information for indicating a plurality of coverage areas in the RAN, and
      triggering information for indicating whether reporting of MDT measurements is to be triggered based in part on whether the coverage areas of the plurality of coverage areas are detected by the UE:
         sequentially in a given order, or
         simultaneously; and
   reporting MDT measurements based in part on the configuration information.

According to various, but not necessarily all, examples of the disclosure there is provided a non-transitory computer readable medium encoded with instructions that, when performed by at least one processor, causes at least the following to be performed:
receiving, at a User Equipment, UE from a node of a Radio Access Network, RAN, configuration information for configuring the UE to perform Minimization of Driving Test, MDT, measurements, wherein the configuration information comprises:
   coverage information for indicating a plurality of coverage areas in the RAN, and
   triggering information for indicating whether reporting of MDT measurements is to be triggered based in part on whether the coverage areas of the plurality of coverage areas are detected by the UE:
      sequentially in a given order, or
      simultaneously; and
reporting MDT measurements based in part on the configuration information.

According to at least some examples of the disclosure there is provided a Radio Access Network, RAN, node comprising:
means for sending, to a User Equipment, UE, configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
   sequentially in a given order, or
   simultaneously.

According to various, but not necessarily all, examples of the disclosure there is provided a method comprising:
sending, from a node of a Radio Access Network, RAN, to a User Equipment, UE, configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
   sequentially in a given order, or
   simultaneously.

According to various, but not necessarily all, examples of the disclosure there is provided computer program instructions for causing an apparatus to perform:
sending, from a node of a Radio Access Network, RAN, to a User Equipment, UE, configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
   sequentially in a given order, or
   simultaneously.

According to various, but not necessarily all, examples of the disclosure there is provided an apparatus comprising:
at least one processor; and
at least one memory including computer program instructions;
the at least one memory and the computer program instructions configured to, with the at least one processor, cause the apparatus at least to perform:
   sending, from a node of a Radio Access Network, RAN, to a User Equipment, UE, configuration information for configuring the UE to perform Minimization of Driving Test, MDT, measurements, wherein the configuration information comprises:
   coverage information for indicating a plurality of coverage areas in the RAN; and
   triggering information for indicating whether reporting of MDT measurements is to be triggered based in part on whether the coverage areas of the plurality of coverage areas are detected by the UE:
      sequentially in a given order, or
      simultaneously.

According to various, but not necessarily all, examples of the disclosure there is provided a non-transitory computer readable medium encoded with instructions that, when performed by at least one processor, causes at least the following to be performed:
sending, from a node of a Radio Access Network, RAN, to a User Equipment, UE, configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
   sequentially in a given order, or
   simultaneously.

According to various, but not necessarily all, examples of the disclosure there is provided a chipset comprising processing circuitry configured to perform the above-mentioned methods.

According to various, but not necessarily all, examples of the disclosure there is provided a module, device and/or system comprising means for performing the above-mentioned methods.

The following portion of this 'Brief Summary' section describes various features that can be features of any of the examples described in the foregoing portion of the 'Brief Summary' section.

In some but not necessarily all examples, the means for reporting MDT measurements is configured to start reporting MDT measurements based in part in response to the UE sequentially detecting the plurality of coverage areas in an order that corresponds to the given order.

In some but not necessarily all examples, a coverage area is determined as being detected by the UE if the UE selects a cell associated with the respective coverage area as a serving cell.

In some but not necessarily all examples, the means for reporting MDT measurements is configured to start reporting MDT measurements based in part in response to the UE simultaneously detecting the plurality of coverage areas.

In some but not necessarily all examples, a coverage area is determined as being detected by the UE when a quality metric of a reference signal transmitted within the coverage area is measured as exceeding a given threshold.

In some but not necessarily all examples, the coverage information comprises at least one of a plurality of cell identifiers and a plurality of beam identifiers.

In some but not necessarily all examples, the UE further comprises means for adjusting, based in part on the configuration information, a frequency of MDT measurements.

In some but not necessarily all examples, the configuration information comprises time information indicative of a measurement duration period for MDT measurements; and the UE further comprises means for performing MDT measurements during the measurement duration period.

In some but not necessarily all examples, the configuration information comprises time information indicative of a detection duration period during which the coverage areas are to be detected simultaneously or in sequence; and the means for reporting MDT measurements is configured to report MDT measurements based in part on the UE detecting the coverage areas simultaneously or in sequence during the detection duration period.

In some but not necessarily all examples, the reported MDT measurements comprise Global Navigation Satellite System, GNSS, based locations of the UE.

In some but not necessarily all examples, the reported MDT measurements are performed after and/or before the UE detecting the coverage areas simultaneously or in sequence.

In some but not necessarily all examples, the means for reporting MDT measurements comprises means for reporting immediate MDT.

While the above examples and optional features are described separately, it is to be understood that their provision in all possible combinations and permutations is contained within the disclosure.

According to various, but not necessarily all, examples of the disclosure there are provided examples as claimed in the appended claims.

### BRIEF DESCRIPTION OF THE DRAWINGS

For a better understanding of various examples of the present disclosure that are useful for understanding the detailed description and certain examples of the present disclosure, reference will now be made by way of example only to the accompanying drawings in which:
FIG. 1 schematically illustrates an example of a wireless communication network suitable for use with examples of the present disclosure;
FIG. 2 schematically illustrates an example of a method according to the present disclosure that can be implemented by a UE;
FIG. 3 schematically illustrates an example of a method according to the present disclosure that can be implemented by a RAN node;
FIG. 4 schematically illustrates an example of an apparatus according to the present disclosure; and
FIG. 5 schematically illustrates an example of a computer program according to the present disclosure.

The figures are not necessarily to scale. Certain features and views of the figures may be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### LIST OF ABBREVIATIONS

- 3GPP: Third Generation Partnership Project
- 5G: 5th Generation
- AMF: Access and Mobility management Function
- AV: Aerial Vehicles
- CGI: Cell Global Identity
- gNB: gNodeB
- GNSS: Global Navigation Satellite System
- ID: Identifier
- IE: Information Element
- IloT: Industrial Internet of Things
- loT: Internet of Things
- LMF: Location Management Function
- MDT: Minimization of Driving Test
- NG: Next Generation
- NR: New Radio/Next Radio
- NTN: Non-terrestrial Networks
- OAM: Operations, Administration and Maintenance
- PCI: Physical Cell ID
- RAN: Radio Access Network
- RSRP: Reference Signal Received Power
- RSRPQ: Reference Signal Received Quality
- TA: Tracking Area
- TAC: Tracking Area Code
- TAI: Tracking Area Identifiers
- UAS: Unmanned Aircraft Systems
- UAV: Unmanned Aerial Vehicles
- UE: User Equipment
- UTM: UAS Traffic Management
- USS: UAS Service Supplier
- V2X: Vehicular to Everything

### DETAILED DESCRIPTION

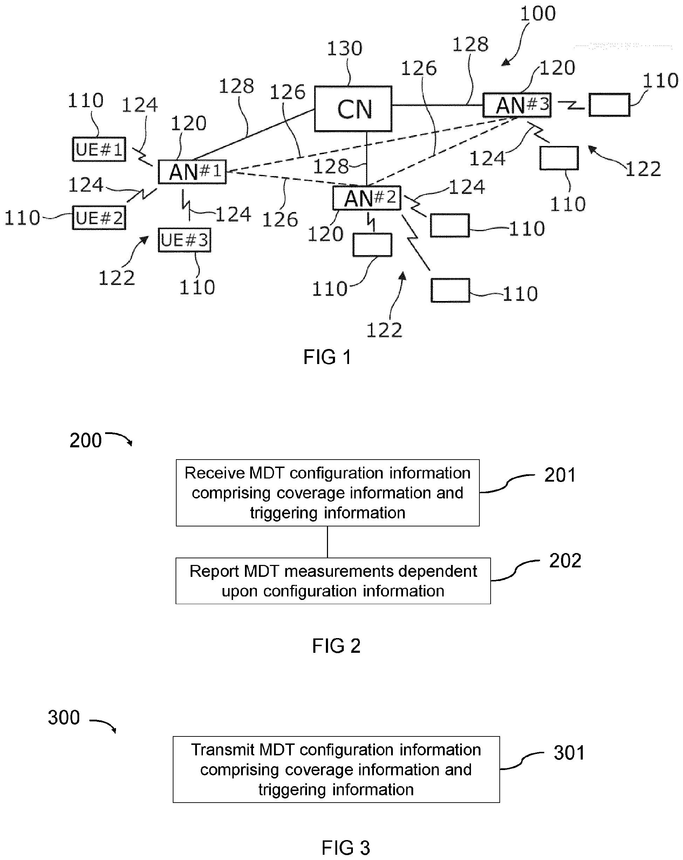

FIG.1 schematically illustrates an example of a network 100 comprising a plurality of network nodes including terminal nodes 110 (also referred to as User Equipment, UE), access nodes 120 (also referred to as RAN nodes), and core network 130.

The terminal nodes 110 and access nodes 120 communicate with each other. The core network 130 communicates with the access nodes 120. One or more core nodes of the core network 130 may, in some but not necessarily all examples, communicate with each other. The one or more access nodes 120 may, in some but not necessarily all examples, communicate with each other.

The network 100 may be a cellular network comprising a plurality of cells 122 each served by an access node 120. The interfaces between the terminal nodes 110 and the access nodes 120 are radio interfaces 124. The access nodes 120 comprise cellular radio transceivers. The terminal nodes 110 comprise cellular radio transceivers.

In the particular example illustrated, the network 100 is a Next Generation (NG) or New Radio (NR) network. NR is the Third Generation Partnership Project (3GPP) name for 5G technology.

Depending on the exact deployment scenario, the access nodes 120 can be RAN nodes such as NG-RAN nodes. NG-RAN nodes may be gNodeBs (gNBs) that provide NR user plane and control plane protocol terminations towards the UE. NG-RAN nodes may be New Generation Evolved Universal Terrestrial Radio Access network (E-UTRAN) NodeBs (ng-eNBs) that provide E-UTRA user plane and control plane protocol terminations towards the UE. The gNBs and ng-eNBs may be interconnected with each other by means of Xn interfaces. The gNBs and ng-eNBs are also connected by means of NG interfaces to the 5G Core (5GC), more specifically to the AMF (Access and Mobility Management Function) by means of the NG-C interface and to the UPF (User Plane Function) by means of the NG-U interface. The access nodes 120 may be interconnected with each other by means of Xn interfaces 126. The cellular network 100 could be configured to operate in licensed or unlicensed frequency bands.

The access nodes 120 can be deployed in a NR standalone operation/scenario. The access nodes 120 can be deployed in a NR non-standalone operation/scenario. The access nodes can be deployed in a Carrier Aggregation operation/scenario. The access nodes 120 can be deployed in a dual connectivity operation/scenario, i.e. Multi Radio Access Technology - Dual Connection (MR-DC), not least for example such as:
Evolved Universal Terrestrial Radio Access - New Radio Dual Connectivity (EUTRA-NR-DC, also referred to as EN-DC),
New Radio - Evolved Universal Terrestrial Radio Access Dual Connectivity (NR-EUTRA-DC, also referred to as NE-DC),
Next Generation Radio Access Network Evolved Universal Terrestrial Radio Access - New Radio Dual Connectivity (NG-RAN E-UTRA-NR Dual Connectivity, also referred to as NGEN-DC), or
New Radio Dual Connectivity (also referred to as NR-DC).

In such non-standalone/dual connectivity deployments, the access nodes 120 may be interconnected to each other by means of X2 or Xn interfaces, and connected to an Evolved Packet Core (EPC) by means of an S1 interface or to the 5GC by means of a NG interface.

The access nodes 120 are network elements in the network responsible for radio transmission and reception in one or more cells 122 to or from the terminal nodes 110. Such access nodes may also be referred to as a transmission reception points (TRP's) or base stations. The access nodes 120 are the network termination of a radio link. An access node can be implemented as a single network equipment, or disaggregated/distributed over two or more RAN nodes, such as a central unit (CU), a distributed unit (DU), a remote radio head-end (RRH), using different functional-split architectures and different interfaces.

The terminal nodes 110 are devices that terminate the user side of the radio link. They are devices allowing access to network services. The terminal nodes 110 may be referred to as User Equipment (UE), mobile terminals or mobile stations. The term 'User Equipment' may be used to designate mobile equipment comprising a smart card for authentication/encryption etc such as a subscriber identity module (SIM). In other examples, the term 'User Equipment' is used to designate mobile equipment comprising circuitry embedded as part of the user equipment for authentication/encryption such as software SIM.

In the following description, an access node 120 will be referred to as a RAN node 120 (e.g. NG-RAN node such as a gNB), and a terminal node 110 will be referred to as a UE 110.

FIG. 2 schematically illustrates an example of a method 200 according to the present disclosure that can be implemented by a UE.

The method comprises, at block 201, receiving, from a Radio Access Network, RAN, node, configuration information for configuring the UE to report (and optionally perform) Minimization of Driving Test, MDT, measurements. Such reporting of MDT measurements may comprise reporting of previously performed/collected MDT measurement data (e.g. MDT data for Logged MDT that has previously been collected, logged and stored in local storage for subsequent reporting) and/or Immediate MDT (i.e. performing/collecting MDT measurements/data and immediately reporting the same, e.g. to the RAN node). The configuration information received by the UE may enable the network to control the UE's reporting (and optionally performing) of MDT measurements (i.e. what, where and when to trigger/initiate the reporting (and optionally performing) of MDT measurements).

The configuration information may be an MDT configuration message. The RAN node may itself receive MDT configuration information from the core network or from an Operations, Administration and Maintenance (OAM) centre.

The configuration information comprises coverage information for indicating a plurality of coverage areas. As will be discussed below, the coverage information, in combination with triggering information, is used to define where and when MDT measurements are to be reported. Such coverage information may define an Area Scope, i.e. one or more areas where MDT measurement/reporting are requested/mandated to take place. The coverage information (and its coverage areas/Area Scope) may be defined by area coverage parameters/identifiers, e.g.:
cell identifiers [such a Physical Cell ID (PCI), or Cell Global Identity (CGI)],
beam identifiers [such as PCI/CGI in combination with Beam ID, or a Radio Resource ID (RRID), a Beam Index (BI) such as a Synchronization Signal Block (SSB) or Channel Status Information Reference Signal (CSI-RS) index, or an Antenna Port (AP)],
Reference Signal Identifier (RSI), or
tracking area identifiers [such as TACs, and TAls].

The coverage information may be defined by an *AreaConfiguration* IE of the MDT configuration message.

The configuration information also comprises triggering information for indicating where and when MDT measurements are to be reported. In particular, the triggering information is configured to indicate whether reporting of MDT measurements is to be triggered/initiated based in part on whether the coverage areas of the plurality of coverage areas are detected by the UE:
sequentially in a given order, or
simultaneously.

The triggering information may comprise a flag, one or more parameter values or IEs.

At block 202 of FIG. 2, the reporting of MDT measurements is based in part on the configuration information. For example, the MDT measurements may be reported when the coverage areas of the plurality of coverage areas are detected by the UE either sequentially in a given order, or simultaneously.

In such a manner, the triggering information may effectively control/adapt an interpretation of the coverage information. For example, a conventional/default interpretation of the coverage information, and conventional triggering of MDT measurements based on the same, may involve reporting MDT measurements simply when any of the coverage areas of coverage information are detected by the UE. Whereas, examples of the disclosure enable additional constraints to be applied so as to provide further constraints and a more refined/granular area of where and when MDT measurements are to be reported based on the coverage areas of coverage information. For example, based on the triggering information, MDT measurements may be reported when the coverage areas of the plurality of coverage areas are detected by the UE either sequentially in a given order, or simultaneously.

The MDT measurements that are reported can be MDT measurements performed by the UE before and/or after the triggering condition for MDT reporting is fulfilled, i.e. the reported MDT measurements comprise MDT measurements performed by the UE either before and/or after the UE detecting the coverage areas sequentially in a given order, or simultaneously. For example, the MDT measurements reported could be MDT measurements previously performed/collected (e.g. Logged MDT) and/or Immediate MDT performed after the triggering condition is fulfilled.

It will be understood that each block and combinations of blocks, can be implemented by various means, such as hardware, firmware, and/or software including one or more computer program instructions. For example, one or more of the procedures described above can be embodied by computer program instructions. In this regard, the computer program instructions which embody the procedures described above can be stored by a memory storage device and performed by a processor.

The following is a non-limiting example of triggering MDT measurement/reporting based on the configuration information, i.e. initiating the performance and/or reporting of MDT measurements based on the coverage information and the triggering information. In this example, the coverage information comprises a list of cell IDs. By default (e.g. in the absence of any triggering information in the configuration information, or wherein the triggering information has a predetermined value [e.g. a first value]), MDT measurements are reported simply when the UE detects a cell ID corresponding to any cell ID of the list of cell IDs of the configuration information (i.e. detecting one of the cell IDs in any order and irrespective of whether it is detected simultaneously with any other cell ID or not). However, where the triggering information is present in the configuration information, or the triggering information has another predetermined value [e.g. a second value], this may cause the triggering of MDT measurement/reporting only where the cell ID's are sequentially detected in a given order, for instance an implicit order corresponding to the order of the cell IDs in an ordered list, or an explicit order of the cell IDs. Hence the network, by appropriately configuring the order of the list of cell IDs in the coverage information and the triggering information, can cause the triggering of MDT measurement/reporting once the UE has visits/moves through a specific sequence of cells as defined by the list of cell ID's. Alternatively, where the triggering information has yet another predetermined value [e.g. a third value], this may cause the triggering of MDT measurement/reporting only where all the cell ID's are detected simultaneously. Hence the network, by appropriately configuring the list of cell IDs in the coverage information and the triggering information, can cause the triggering of MDT measurement/reporting once the UE visits/is within an overlapping coverage area/area of intersection of the cell coverage areas. The triggering information may thereby enable an adjustment of the interpretation of the coverage information that is used to define the area(s) where reporting (and optionally performance) of MDT measurements is to be triggered. In some examples, based upon expiration of a predetermined time period (which may be defined in the configuration information), the cell sequence based or overlapping cell based reporting of MDT measurements may revert to a default performance of MDT measurement/reporting (e.g. based simply on whether any of the cell IDs are detected - in any order, or alone or in any combination).

Advantageously, the use of a triggering information as per examples of the present disclosure enables a refinement of the definition of the MDT measurement/reporting areas/Area Scope based on the coverage information of the configuration information. By applying additional constraints on the definition of the Area Scope via the use of triggering information, the Area Scope can be limited to a finer granularity than that of a single cell, e.g. a part thereof that overlaps with one or more other cells. The use of triggering information may thereby provide greater control and flexibility of the definition of MDT measurement/reporting areas with enhanced area resolution. Moreover, it does so in an efficient manner that minimizes the required signaling load.

Examples of the present disclosure may use Immediate MDT. Immediate MDT can be subdivided into two categories, depending on the way MDT is initiated. Signaling based MDT is initiated towards a specific UE by Signaling Trace Activation messages from the core network. Management based MDT is initiated by the Management-based Trace function from OAM. Management based MDT is initiated towards UEs in a specific Area.

Trace Record for Immediate MDT measurement M1 includes the following measurement attributes:
- Reference Signal Received Power RSRPs (List of RSRP measurements, one per measured cell, received in RRC measurement report);
- Reference Signal Received Quality RSRQs (List of RSRQ measurements, one per measured cell, received in RRC measurement report);
- PCIs (List of Physical Cell Identifiers matching the sequence/order of cells on which the RSRP and RSRQ values are measured);
- Triggering Event (event that triggered the M1 measurement report, namely A1, A2, A3, A4, A5, A6, B1, B2);
- UE Location (UE positioning information and sensors data).

The below table indicates various MDT measurements that can be reported, as defined in an NR *UE Location* Trace Record:

| **MDT measurement name** | **Measurement attribute name(s)** | **Measurement attribute definition** | **Notes** |
|---|---|---|---|
| | GNSS pos | GNSS based coordinates, including (latitude, longitude), as reported by the UE. The IE can be any of ellipsoidPoint, ellipsoidPointWithUncertaintyCircle, ellipsoidPointWithUncertaintyEllipse, ellipsoidPointWithAltitude, ellipsoidPointWithAltitudeAndUncertaintyEllipsoid, ellipsoidArc, polygon depending on the IE present in the RRC message. | TS 36.331 [28] |
| | UE rx-tx | The UE reported UE rx-tx time difference measurement. The attribute is used to record E-CID positioning measurements, if available. | TS 32.422 [3] |
| | | | TS 37.320 [32] |
| UE location | | | TS 36.331 [28] |
| | gNB rx-tx | The gNB measured gNB rx-tx time difference. The attribute is used to record E-CID positioning measurements, if available. | TS 32.422 [3] |
| | | | TS 37.320 [32] |
| | | | TS 36.214 [38] |
| | AoA | The gNB measured angle of arrival measurement. The attribute is used to record E-CID positioning measurements, if available. | TS 32.422 [3] |
| | | | TS 37.320 [32] |
| | | | TS 36.214 [38] |
| | Sensor information | The UE reported data from 3 types of sensors if available: a gyroscope, an accelerometer and a barometer data. | TS 38.331 [21] |

In some examples, the reported MDT measurements comprise Global Navigation Satellite System, GNSS, based locations of the UE, i.e. locations derived from GNSS signals not least such as GPS positions. Where the MDT measurement data includes GNSS derived location data and the MDT measurement data is reported to the network via Immediate MDT, this can provide accurate UE location tracking. Advantageously, the use of triggering information enables a refinement of the definition of the MDT measurement/reporting areas and provides a greater degree of control and flexibility of UE location tracking using the MDT framework and immediate MDT. Such MDT-based UE location tacking may be used for geo-fencing and UAV flight control.

In some examples, the UE comprises means for performing MDT measurements. Such means may comprise one or more of: a radio transceiver, sensors (not least: a gyroscope, an accelerometer and a barometer), a GNSS receiver for determining GNSS positional data, as well as other means for measuring and determining MDT measurement data.

In some examples, the UE comprises means for reporting MDT measurements. Such means may comprise a radio transceiver.

In some examples, the UE comprises means for determining whether the UE is in a particular coverage area. Such a determination may comprise detection, by the UE, whether the UE selects a cell associated with the respective coverage area as a serving cell, i.e. determining whether the UE camps in/visits a cell associated with a particular cell ID. In some examples, the determination as to whether the UE is in a particular coverage area comprises detecting, by the UE, when a quality metric (e.g. not least Reference Signal Received Power, RSRP) of a reference signal (e.g. not least Synchronization Signal Block, SSB/Channel Status Information Reference Signal, CSI-RS) transmitted within the coverage area is measured as being past (i.e., above or below) a predetermined threshold.

In some examples, the initiation (and continuing with) of the MDT measurement/reporting is based in part on a trigger condition/event based in part on the coverage information and the triggering information. The trigger condition/event could be a determination by the UE that it currently satisfies the condition/event (e.g. UE movement through cells in a sequential order that follows an ordered list of cells and/or beam IDs, or the UE being in an area of intersection of the list of cells and/or beam IDs). The MDT measurements may be reported during a given/configured time period, or until another condition, e.g. an area "leaving" condition, is fulfilled.

An example of a first type of triggering information will now be described.

In this example, the coverage information comprises a set of a plurality of coverage area identifiers for indicating the plurality of areas where the reporting of MDT measurements is requested (i.e. MDT measurement areas). The set of a plurality of coverage area identifiers may comprise a list of: Cell IDs, Cell IDs + Beam IDs, TAs, TACs and/or TAls. The triggering information indicates whether reporting of MDT measurements is to be triggered based in part on whether the coverage areas of the plurality of coverage areas are detected by the UE: sequentially in a given order, or simultaneously.

Based in part on the triggering information, the UE determines whether each of the plurality of coverage areas are detected by the UE: sequentially in a given order, or simultaneously. For example, where the triggering information is present or has a first predetermined parameter value, the set of coverage areas is interpreted as an ordered set of coverage areas, i.e. MDT measurements are to be reported only where an ordered set of coverage areas are sequentially detected. Alternatively, where the triggering information is not present or has a default parameter value, MDT measurements are reported in a default/conventional manner, e.g. based on the UE detecting any of the coverage areas in any order.

Responsive to a determination that the UE is traversing a plurality of coverage areas in a sequential order that corresponds to the sequential order of the ordered set of the plurality of coverage area identifiers, the UE's reporting of MDT measurements is controlled (e.g. triggered, initiated, adjusted [e.g. MDT measurement reporting frequency]).

In some examples, a determination that the UE is traversing a plurality of coverage areas in a given sequential order may be based in part on the UE detecting when a particular sequence of cells (e.g. C1, C2 and C3) are selected by the UE as successive serving cells, i.e. the UE detecting that it sequentially visits/camps on cells: C1, then C2, and then C3.

In some examples, a determination that the UE is traversing a plurality of coverage areas in a given sequential order may be based in part on the UE detecting when RSRP/RSRQ measurement values of an ordered sequence of cells (e.g. C1, C2 and C3) are sequentially detected as being above a given threshold.

One possible implementation of this first type of triggering information is as follows.

The triggering information may comprise a flag in the list of cell ids, or a new IE, provided in the coverage information to indicate that reporting of MDT measurements is to be triggered based in part on the coverage areas of the plurality of coverage areas being detected by the UE sequentially in a given order.

If the flag is false, then the UE could perform and report MDT measurements in a default/conventional manner e.g. as per the current existing specification, e.g. based on the UE's detection of any of the coverage areas.

If the flag is true, then the UE could trigger the performance and reporting of MDT measurements based in part on the coverage areas of the plurality of coverage areas being detected by the UE sequentially in a given order. As an example, consider an ordered list of a sequence of cells: C1, C2, and C3. In a first possible implementation, the UE performs/takes an MDT measurement while in C1. However, it does not report the MDT measurement at that time (i.e. while in C1). Then, the UE determines whether the next cell is C2. If it is, the UE performs an MDT measurement. However, again, the UE does not report its MDT measurement at that time (i.e. while in C2). Then, the UE determines whether the next cell is C3. If it is, the UE performs an MDT measurement and also, having determined it has followed the cells in the correct sequential order, the UE reports its MDT measurements performed while in cells C1, then C2, and then C3. In other words, in this first implementation, the UE performs an MDT measurement in each of C1, C2, and C3, but only reports its MDT measurements when in C3. If the UE has not followed the sequential order: C1, C2 and C3 (i.e. it does not proceed from C1 to C2 and then from C2 to C3), then the UE does not report any of the MDT measurements it has performed/taken. This first implementation allows tracking of the UE's location moving along an expected trajectory over an ordered sequence of cells. In an alternative second implementation, an MDT measurement is taken and reported only after the sequence of cells: C1, C2 and C3 has been visited, i.e. having visited C1, then C2, and then C3 in order, an MDT measurement is then performed while in C3. In this second implementation, it would not be possible for the UE to perform (or report) MDT measurements in cells C1 and C2, since the triggering of the performance of MDT measurements only occurs after the ordered sequence has been observed (and hence it would then be too late, when the UE is in C3 to perform MDT measurements in cells C1 and C2). In other words, in this second implementation, the UE (after having visited cells C1, C2 and C3 in order) just performs and reports an MDT measurement while in C3 (and does not perform any MDT measurements in C1 or C2). In either of the above first and second implementations, the MDT measurements may include GNSS information.

In addition, a timer may be associated with the ordered list of cells on which a UE trajectory is defined restricting the visited ordered sequence of cells within a certain time window. The UE may interpret the timer expiration as an expiration of the ordered list configuration turning it into an unordered list (fallback mode). This allows the UE to perform and report measurements (including location information) to the network when it finds itself in any of the listed cells without any order upon timer expiration. As another alternative, the timer expiration implies the end of the configured ordered cell list. An unordered list may also be configured (as it is today) on the cells of which the UE starts taking measurements when the ordered list timer expires.

An example of a second type of triggering information will now be described.

In this example, the coverage information comprises a set of a plurality of coverage area identifiers for indicating at least one area where the reporting of MDT measurements is requested. The set of a plurality of coverage area identifiers may comprise a list of: Cell IDs (e.g. PCI/CGI), Cell IDs + Beam IDs (e.g. PCI/CGI + BEAM_ID), TAs, TACs and/or TAls. The triggering information indicates that reporting of MDT measurements is to be triggered based in part on whether the coverage areas of the plurality of coverage areas are detected by the UE simultaneously. Effectively the triggering information signifies that the set of the plurality of coverage area identifiers is to be interpreted as an area of overlap/intersection of the plurality of coverage area identifiers of the set. Where the triggering information is present or has a second predetermined parameter value, MDT measurements are triggered to be performed and reported based in part on whether the coverage area identifiers are all simultaneously detected by the UE. Alternatively, where the triggering information is not present or has a default parameter value, MDT measurements may be performed and reported in a conventional/default matter, e.g. as per the current existing specification, e.g. based on the UE's detection of any of the coverage areas.

Responsive to a determination that the UE is present within an area of intersection of the plurality of coverage areas (e.g. responsive to simultaneous detection of the listed cell IDs and/or beam IDs), the UE's reporting of MDT measurements is controlled (e.g. initiating, triggering, adjusting [e.g. MDT measurement frequency] the UE's reporting of MDT measurements).

In some examples, a determination that the UE is present within an area of intersection of the plurality of coverage areas may be based in part on the UE detecting when RSRP/RSRQ measurement values of respective cells (e.g. C1, C2 and C3) are all measured as being concomitantly above a given threshold.

One possible implementation of this second type of triggering information is as follows.

The triggering information comprises a flag in the list of cell IDs, or a new IE in the coverage information to reflect that reporting of MDT measurements is to be triggered based in part on whether the coverage areas of the plurality of coverage areas are detected by the UE simultaneously (i.e. coverage information/Area Scope should be interpreted by the UE as an intersection of all the listed cell IDs).

The UE will report MDT measurements and include its GNSS information only when it simultaneously detects all cell IDs, i.e. it finds itself located in the intersection of those cell IDs. In addition, when this event is observed, the UE may keep reporting GNSS location information to the network with a certain periodicity until it exits the intersection of the cells given in the configuration.

As one possible alternative the UE may be given an MDT configuration specifying a decrease in location reporting periodicity when the UE is found inside the intersection of cell IDs. For example, if cells C1, C2, C3 are given in the coverage information, the UE may perform and report measurements (including GNSS location information) with a periodicity P but when it is found in the intersection of the cells it may report with a periodicity P'<P (i.e., more GNSS location information is reported, i.e. more frequently, when the UE is inside the intersection).

In addition, a timer may be associated with the intersection list of cells. The UE may interpret the timer expiration as an expiration of the intersection list configuration turning it into a non-intersection list (fallback/default mode). This allows the UE to report measurements (including GNSS location information) to the network when it finds itself outside of the intersection list of cells upon timer expiration. As another alternative, the timer expiration implies the end of the configured intersection cell list. An unordered list may also be configured (as it is today) on the cells of which the UE starts taking measurements when the ordered list timer expires.

The above described first and second implementations can be applied to a combination of NR cells and NR beams, instead of just NR Cell IDs. This requires additional triggering information and/or an indicator/flag in the MDT configuration to indicate that the configuration from the first and/or second implementations be applied for beams (i.e. particular beams of a particular cell - such beams being identified by Cell ID + Beam ID).

In addition, in certain implementations, the MDT configuration from Core or OAM may include an indicator that an extra refinement in the granularity of the Area Scope that is based on a set of beam indexes (ordered or an intersection) is allowed.

When NG-RAN receives an MDT Configuration with an indication that Area Scope is restricted according to an ordered list of beam indexes or according to an intersection of beam indexes, then it may decide to send this refined MDT Configuration to a UE.

In some alternatives even though UE reports measurement information when it is located in the indicated cell IDs/ Beam IDs, it only reports location information (with same or smaller periodicity) when it is inside the refined area given through the intersection of Cell IDs/Beam IDs or when the ordered sequence of cells or beam indexes is satisfied.

Any of the examples above can support refined location information verification procedures (in LMF or OAM) when network-based UE positioning information is also available (e.g. verify/cross-check the validity of GNSS reports)

In some examples, the UE further comprises a timer for adjusting the reporting of MDT measurements. In such examples, the reporting of MDT measurements is further based in part on the timer. For example, with regards to the above mentioned first type of triggering information (regarding use of detection of an ordered set of the plurality of coverage area identifiers), upon expiration of the timer the reporting of MDT measurements is reverted to a default/fallback, e.g. as per the current existing specification (regarding using simply any of the plurality of coverage area identifiers). In other words, the expiration of the timer can be used as a time duration/expiration of the adjustment effected by the triggering information, i.e. the expiration of the timer 'undoes' the adjustment caused by the triggering information.

Similarly, with regards to the above mentioned second type of triggering information for adjusting the reporting of MDT measurements (regarding use of simultaneous detection of the plurality of coverage area identifiers), upon expiration of the timer the interpretation of the plurality of coverage area identifiers is further adjusted, e.g. so as to revert to a default/conventional/fall-back interpretation of an unordered/non-intersecting set of areas.

The triggering information need not only be configured to cause an adjustment with regards to spatial aspects of the reporting of MDT measurements, i.e. with regards to where reporting it is to occur (such as with respect to particular coverage area(s) and/or an ordered sequence thereof); but can also cause an adjustment of temporal aspects of the performance/reporting of MDT measurements.

In some examples, a frequency of instances of MDT measurements is adjusted based in part on triggering information and/or the coverage information. For instance, a frequency or periodicity of instances of MDT measurements may be adjusted (increased or decreased) based on whether UE is in the defined coverage area (e.g. following an ordered sequence of a list of cell IDs or at an intersecting area of the listed cell IDs).

In some examples, the configuration information comprises time information indicative of a measurement duration period of the MDT measurements and the reporting of MDT measurements is based in part on the measurement duration period. For instance, with regards to the above mentioned first type of triggering information (regarding detection of an ordered set of the plurality of coverage area identifiers), following a measurement duration period, the reporting of MDT measurements may be reverted to a default MDT reporting scheme, e.g. as per the current existing specification (regarding using simply any of the plurality of coverage area identifiers). Similarly, with regards to the above mentioned second type of triggering information (regarding simultaneous detection of the plurality of coverage area identifiers), following a measurement duration period, the reporting of MDT measurements may be reverted to a default MDT reporting scheme, e.g. as per the current existing specification (regarding using simply any of the plurality of coverage area identifiers). In other words, the measurement duration period can be used as a time duration of the adjustment effected by the triggering information, i.e. the expiration of the measurement duration period 'undoes' the adjustment caused by the triggering information.

An example implementation for signalling the new information (i.e. not least regarding triggering information and timers as discussed above) within an *AreaConfiguration* IE, of an MDT configuration message is given below [with the new IE's **highlighted in bold].**

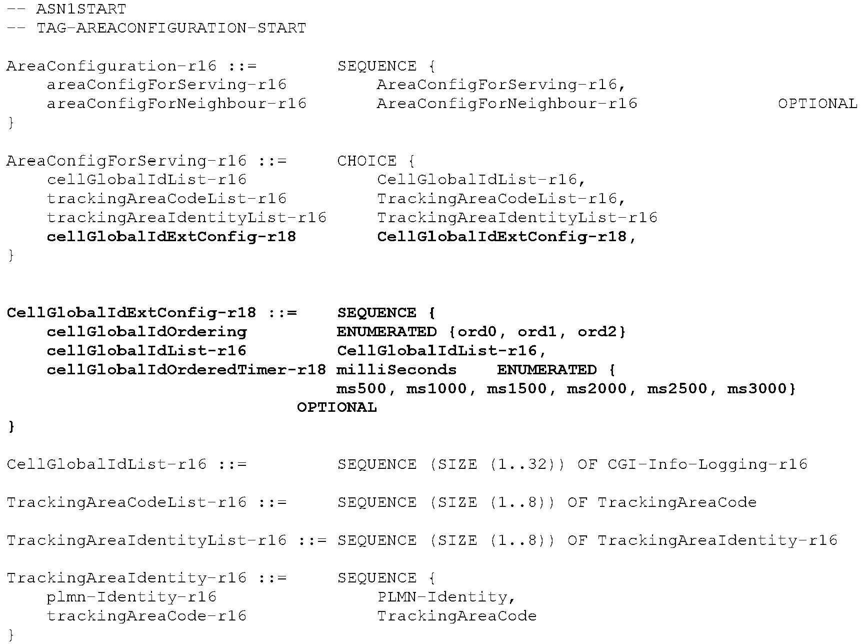

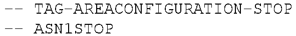

In some examples, the triggering information may comprise one or more of the following IEs:

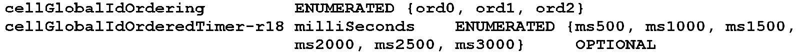

In this particular example, the parameter "ord0" corresponds to triggering information for indicating that the reporting of MDT measurements is to be triggered based on a default/conventional manner e.g. as per the current existing specification, e.g. based on the UE's detection of any of the coverage areas. The parameter "ord1" corresponds to triggering information for indicating that reporting of MDT measurements is to be triggered based on the coverage areas of the plurality of coverage areas being detected by the UE sequentially in a given order. The parameter "ord2" corresponds to triggering information for indicating that reporting of MDT measurements is to be triggered based on the coverage areas of the plurality of coverage areas being detected by the UE simultaneously.

The immediate MDT-based UE location mechanism of various examples of the present disclosure may enable direct collection and use of UE location information at an NG-RAN level and it can integrate with LMF/Core Network (CN) based location solutions (as required by UAV/V2X deployments relying on dedicated application servers)

Examples of the present disclosure introduce new MDT configurations, in combination with the existing Area Scope configuration, which provides to the UEs:
A list of ordered Cells IDs and/or Beam IDs which, when visited in the specified order by the UE, are used by the UE to trigger their MDT measurements and reporting (including GNSS information/location).
A set of Cell IDs and/or Beam IDs, with overlapping radio coverage which, when detected simultaneously by the UE, are used by the UE to trigger their MDT measurements and reporting (including GNSS information/location).
NG-RAN RRC signalling to update/refresh the above configurations in selected UEs to enable spatial refining of the location tracking.

Examples of the present disclosure can be used, not least for example, in Unmanned Aerial Vehicles (UAVs), Vehicular to Everything (V2X), Internet of Things (IoT), and Industrial Internet of Things (IIoT) deployments for tracking where precise and timely UE location may be desired only in certain geo-areas/geo-fences and within limited time periods. Examples can even be used with Non-Terrestrial Network (NTN) deployment scenarios where precise and timely UE location may be desired only in certain geo-areas/geo-fences and within limited time periods.

For UAV applications, it can be expected that a UAV-UE may be mandated to provide detailed GNSS location information, else the UAV might not be authorised to fly by an Unmanned Aircraft Systems (UAS) Traffic Management (UTM) or UAS Service Supplier (USS). While currently MDT support is not a mandatory UE feature, for UAV UEs there could be a requirement to support a minimum set of MDT/Area Scope configurations to ensure expected reliable operation and service from the NG-RAN. Similar assumptions can be extrapolated to the context of IloT, V2X or even NTN scenarios.

One major aspect of UAV tracking is the timeliness of the location information depending of its use in various parts of the 5G network. While the Location Management Function (LMF)/AMF can control/manage the UAV-UE location information, potentially also interfacing with UTM/USS, the communication between UE and these entities also entails certain latency. Additionally, when the NG-RAN needs to react to the UAV tracking information, e.g. when entering a geo-fenced area, then the extra communication delay from LMF to NG-RAN/gNB need to be further factored in. Examples of the present disclosure enables direct collection and use of UE location information at NG-RAN level and it integrates with LMF/CN based location solutions (as required by UAV/V2X deployments relying on dedicated application servers).

In IloT and V2X scenarios, instead of the geo-fencing areas, the network (NGRAN and 5GC) might need to define areas where devices require special traffic QoS settings, have different mobility patterns, require special RRM functionalities (beamforming, dual-connectivity, etc). These scenarios can also benefit from having NG-RAN based improvements in the definition and tracking of geographical areas of interest such as may be provided by examples of the present disclosure.

FIG. 3 schematically illustrates an example of a method 300 according to the present disclosure that can be implemented by a RAN node.

The method comprises:
sending, from a node of a Radio Access Network, RAN, to a User Equipment, UE, configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
   sequentially in a given order, or
   simultaneously.

The RAN node may itself receive MDT configuration information from the core network or the OAM centre and use the same to duly configure the UE.

The MDT configuration information may be transmitted via RRC signaling by the RAN node when initially configuring one or more selected UEs for reporting MDT measurements (including GNSS location). For example, the RAN node may transmit RRC signalling to configure the above described two types of triggering information/MDT triggers (e.g. ordered list of cell IDs and intersection of cell IDs).

The RAN node may also subsequently transmit new/updated MDT configuration information via further RRC signaling (i.e. after having transmitted initial MDT configuration information) to update the MDT configuration for one or more selected UEs to enable further spatial refining of the location tracking. For instance, switching the MDT trigger from cell-based to beam-based location tracking (e.g. switching from an ordered list of cell IDs to an ordered list of beam IDs, or switching from an intersection of cell IDs to an intersection of beam IDs). The transmission of such subsequently transmitted new/updated MDT configuration information may be responsive to the RAN node itself receiving new/updated MDT configuration information from the core network or the OAM centre.

Examples of the disclosure may thereby provide a mechanism that allows the adaptive control/triggering of UE location reporting (i.e. GNSS coordinates reporting) with finer spatial granularity, while minimizing the required signaling load.

When NG-RAN receives an MDT Configuration with an indication that Area Scope is restricted according to an ordered list of beam indexes or according to an intersection of beam indexes, then it may decide to send this refined MDT Configuration to a UE.

MDT configuration received by the RAN node from the Core or the OAM (for the RAN node to use to configure the UE) may include an indicator which indicates that an extra refinement in the granularity of the Area Scope, e.g. that it is to be based on a set of beam indexes (ordered or an intersection thereof), is allowed.

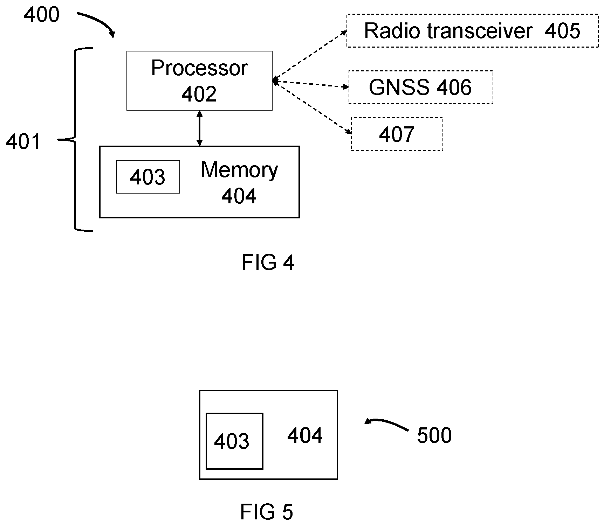

FIG. 4 schematically illustrates a block diagram of an apparatus 400 according to an example of the present disclosure. The component blocks of FIG. 4 are functional and the functions described may or may not be performed by a single physical entity. The apparatus comprises a controller 401, which could be provided within a device such as a UE 110 or a RAN node 120.

The controller 401 can be embodied by a computing device, not least such as those mentioned above. In some, but not necessarily all examples, the apparatus can be embodied as a chip, chip set or module, i.e. for use in any of the foregoing. Implementation of the controller 401 may be as controller circuitry. The controller 401 may be implemented in hardware alone, have certain aspects in software including firmware alone or can be a combination of hardware and software (including firmware).

As illustrated in FIG. 4 the controller 401 may be implemented using instructions that enable hardware functionality, for example, by using executable instructions of a computer program 403 in a general-purpose or special-purpose processor 402 that may be stored on a computer readable storage medium 404 (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402. The apparatus may be coupled to a radio transceiver 405. Where the apparatus is embodied in a UE 110, the UE may further comprise a GNSS receiver/module 406 for determining GNSS positions (e.g. a GPS receiver/module), and one or more other components 407 (not least for example: a timer, sensors, user interface elements or other devices). Where the apparatus is embodied in a RAN node 120 a GNSS receiver/module 406 may not be provided.

The memory 404 stores a computer program 403 comprising computer program instructions (computer program code) that controls the operation of the apparatus 400 when loaded into the processor 402. The computer program instructions, of the computer program 403, provide the logic and routines that enables the apparatus to perform the methods, processes, procedures and signalling described above and illustrated in FIGs. 2 or 3. The processor 402 by reading the memory 404 is able to load and execute the computer program 403.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

The apparatus may include one or more components for effecting the above described method of FIGs 2 or 3. It is contemplated that the functions of these components can be combined in one or more components or performed by other components of equivalent functionality. The description of a function should additionally be considered to also disclose any means suitable for performing that function. Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

In examples where the apparatus is provided within a UE 110, the apparatus therefore comprises:
at least one processor 402; and
at least one memory 404 including computer program code
the at least one memory 404 and the computer program code configured to, with the at least one processor 402, cause the apparatus at least to perform:
   receiving, at a User Equipment, UE, from a node of a Radio Access Network, RAN, configuration information for configuring the UE to perform Minimization of Driving Test, MDT, measurements, wherein the configuration information comprises:
      coverage information for indicating a plurality of coverage areas in the RAN, and
      triggering information for indicating whether reporting of MDT measurements is to be triggered based in part on whether the coverage areas of the plurality of coverage areas are detected by the UE:
         sequentially in a given order, or
         simultaneously; and
   reporting MDT measurements based in part on the configuration information.

The UE may be a UE of/integrated with/associated with a UAV.

In examples where the apparatus is provided within a RAN node 120, the apparatus therefore comprises:
at least one processor 402; and
at least one memory 404 including computer program code
the at least one memory 404 and the computer program code configured to, with the at least one processor 402, cause the apparatus at least to perform:
   sending, from a node of a Radio Access Network, RAN, to a User Equipment, UE, configuration information for configuring the UE to perform Minimization of Driving Test, MDT, measurements, wherein the configuration information comprises:
   coverage information for indicating a plurality of coverage areas in the RAN; and
   triggering information for indicating whether reporting of MDT measurements is to be triggered based in part on whether the coverage areas of the plurality of coverage areas are detected by the UE:
      sequentially in a given order, or
      simultaneously.

According to some examples of the present disclosure, there is provided a system (e.g. at least one UE 110 and a RAN node 120).

The UE 110, the RAN node 120 can be part of the Internet of Things forming part of a larger, distributed network.

As illustrated in FIG. 5, the computer program 403 may arrive at the apparatus 400 via any suitable delivery mechanism 500. The delivery mechanism 508 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 403. The delivery mechanism may be a signal configured to reliably transfer the computer program. The apparatus 400 may propagate or transmit the computer program as a computer data signal.

In certain examples of the present disclosure, there is provided computer program instructions for causing a UE 110 to perform at least the following or for causing performing at least the following:
receiving, at a User Equipment, UE, from a node of a Radio Access Network, RAN, configuration information for configuring the UE to perform Minimization of Driving Test, MDT, measurements, wherein the configuration information comprises:
   coverage information for indicating a plurality of coverage areas in the RAN, and
   triggering information for indicating whether reporting of MDT measurements is to be triggered based in part on whether the coverage areas of the plurality of coverage areas are detected by the UE:
      sequentially in a given order, or
      simultaneously; and
reporting MDT measurements based in part on the configuration information.

In certain examples of the present disclosure, there is provided computer program instructions for causing a RAN node 120 to perform at least the following or for causing performing at least the following:
sending, from a node of a Radio Access Network, RAN, to a User Equipment, UE, configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
   sequentially in a given order, or
   simultaneously.

Various, but not necessarily all, examples of the present disclosure can take the form of a method, an apparatus or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

In some example, the apparatus is embodied in a: UAV, UAS, GPS device, IOT device, IIOT device, a client device, a wireless communications device, a mobile cellular device, a hand held portable electronic device, such as a mobile telephone, wearable computing device or personal digital assistant, that can additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer 3 (MP3) or other format and/or (frequency modulation/amplitude modulation) radio broadcast recording/playing), downloading/sending of data functions, image capture function (e.g. using a (e.g. in-built) digital camera), and gaming functions. The apparatus can be embodied by a computing device, not least such as those mentioned above. However, in some examples, the apparatus can be embodied as a chip, chip set or module, i.e. for use in any of the foregoing. As used here 'module' refers to a unit or apparatus that excludes certain parts/components that would be added by an end manufacturer or a user.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples the apparatus can be provided in a mobile terminal, other types of electronic devices, such as, but not limited to, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The UE may also refer to Internet of Things (IoT) devices, Industrial IOT devices, massive industrial networks, smart city infrastructure, wearable devices, networked medical devices, autonomous devices, etc. These types of UE devices may operate for extended periods of time without human intervention (e.g., without maintenance, replacing or recharging an on-device battery, etc.), may have reduced processing power and/or memory storage, may have reduced battery storage capability due to having small form factors, may be integrated into devices (e.g. UAVs, UASs) or machinery (e.g., heavy machinery, factory machinery, sealed devices, etc.), may be installed/located in hazardous environment or difficult to access environments, etc.

Various examples of the present disclosure may find application as enabling components of: location tracking systems, navigation systems; UAV controllers, UTM, V2X, automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; user interfaces also known as human machine interfaces; networks including cellular, non-cellular, and optical networks; ad-hoc networks; the internet; the internet of things; virtualized networks; and related software and services.

Although specific terms are employed herein, they are used in a generic and descriptive sense only and not for purposes of limitation.

Features described in the preceding description can be used in combinations other than the combinations explicitly described. Although functions have been described with reference to certain features, those functions can be performable by other features whether described or not. Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent. Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory), obtaining and the like. Also, "determining" can include resolving, selecting, choosing, establishing, and the like.

References to a parameter can be replaced by references to "data indicative of", "data defining" or "data representative of" the relevant parameter if not explicitly stated.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description.

## Claims

1. A User Equipment, UE, (110) comprising:
means for receiving (405), from a node of a Radio Access Network, RAN, (120) configuration information for configuring the UE to perform Minimization of Driving Test, MDT, measurements, wherein the configuration information comprises:
coverage information for indicating a plurality of coverage areas in the RAN, and
triggering information for indicating whether reporting of MDT measurements is to be triggered based in part on whether the coverage areas of the plurality of coverage areas are detected by the UE:
sequentially in a given order, or
simultaneously; and
means for reporting MDT measurements based in part on the configuration information.

2. The UE of claim 1, wherein the means for reporting MDT measurements is configured to start reporting MDT measurements based in part in response to the UE sequentially detecting the plurality of coverage areas in an order that corresponds to the given order.

3. The UE of claim 2, wherein a coverage area is determined as being detected by the UE if the UE selects a cell associated with the respective coverage area as a serving cell.

4. The UE of any of claims 1 - 3, wherein the means for reporting MDT measurements is configured to start reporting MDT measurements based in part in response to the UE simultaneously detecting the plurality of coverage areas.

5. The UE of any previous claim, wherein wherein a coverage area is determined as being detected by the UE when a quality metric of a reference signal transmitted within the coverage area is measured as being past a given threshold.

6. The UE of any previous claim, wherein the coverage information comprises at least one of: a plurality of cell identifiers and a plurality of beam identifiers.

7. The UE of any previous claim, wherein the UE further comprises means for adjusting, based in part on the configuration information, a frequency of MDT measurements.

8. The UE of any previous claim, wherein the configuration information comprises time information indicative of a measurement duration period for MDT measurements; and wherein the UE further comprises means for performing MDT measurements during the measurement duration period.

9. The UE of any previous claim, wherein the configuration information comprises time information indicative of a detection duration period during which the coverage areas are to be detected simultaneously or in sequence; and
wherein the means for reporting MDT measurements is configured to report MDT measurements based in part on the UE detecting the coverage areas simultaneously or in sequence during the detection duration period.

10. The UE of any previous claim, wherein the reported MDT measurements comprise Global Navigation Satellite System, GNSS, based locations of the UE.

11. The UE of any previous claim, wherein the reported MDT measurements are performed after and/or before the UE detecting the coverage areas simultaneously or in sequence.

12. A method (200) executed by a User Equipment, UE, (110), comprising:
receiving (201), at the User Equipment, UE, (110) from a node of a Radio Access Network, RAN, (120) configuration information for configuring the UE to perform Minimization of Driving Test, MDT, measurements, wherein the configuration information comprises:
coverage information for indicating a plurality of coverage areas in the RAN, and
triggering information for indicating whether reporting of MDT measurements is to be triggered based in part on whether the coverage areas of the plurality of coverage areas are detected by the UE:
sequentially in a given order, or
simultaneously; and
reporting (202) MDT measurements based in part on the configuration information.

13. Computer program instructions to be executed by a User Equipment, UE, (110), for causing the User Equipment, UE, (110) to perform:
receiving, from a node of a Radio Access Network, RAN, (120) configuration information for configuring the UE to perform Minimization of Driving Test, MDT, measurements, wherein the configuration information comprises:
coverage information for indicating a plurality of coverage areas in the RAN, and
triggering information for indicating whether reporting of MDT measurements is to be triggered based in part on whether the coverage areas of the plurality of coverage areas are detected by the UE:
sequentially in a given order, or
simultaneously; and
reporting MDT measurements based in part on the configuration information.

14. A Radio Access Network, RAN, node (120) comprising:
means for sending (405), to a User Equipment, UE, (110) configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
sequentially in a given order, or
simultaneously.

15. A method (300) executed by a Radio Access Network, RAN, node (120) comprising:
Sending (301), from the node of a Radio Access Network, RAN, (120) to a User Equipment, UE, (110) configuration information for configuring the UE to perform Minimization of Driving Test, MDT, measurements, wherein the configuration information comprises:
coverage information for indicating a plurality of coverage areas in the RAN; and
triggering information for indicating whether reporting of MDT measurements is to be triggered based in part on whether the coverage areas of the plurality of coverage areas are detected by the UE:
sequentially in a given order, or
simultaneously.

## Patentansprüche

1. Endgerät (User Equipment, UE) (110) umfassend:
Mittel zum Empfangen (405) von Konfigurationsinformationen von einem Knoten eines Funkzugangsnetzes (Radio Access Network, RAN) (120) zum Konfigurieren des Endgeräts zur Durchführung von Minimizing of Driving Test-Messungen (MDT-Messungen), wobei die Konfigurationsinformationen umfassen:
Abdeckungsinformationen zum Angeben einer Vielzahl von Abdeckungsgebieten in dem RAN, und
Auslöseinformationen, die angeben, ob die Meldung von MDT-Messungen teilweise basierend darauf ausgelöst werden soll, ob die Abdeckungsgebiete der Vielzahl von Abdeckungsgebieten durch das Endgerät:
nacheinander in einer vorgegebenen Reihenfolge, oder
gleichzeitig erkannt werden; und
Mittel zum Melden von MDT-Messungen teilweise basierend auf den Konfigurationsinformationen.

2. Endgerät nach Anspruch 1, wobei das Mittel zum Melden von MDT-Messungen so konfiguriert ist, dass es mit dem Melden von MDT-Messungen teilweise als Reaktion darauf beginnt, dass das Endgerät die Vielzahl von Abdeckungsgebieten nacheinander in einer Reihenfolge erkennt, die der vorgegebenen Reihenfolge entspricht.

3. Endgerät nach Anspruch 2, wobei ein Abdeckungsgebiet als durch das Endgerät erkannt bestimmt wird, wenn das Endgerät eine Zelle, die dem jeweiligen Abdeckungsgebiet zugeordnet ist, als eine bedienende Zelle auswählt.

4. Endgerät nach einem der Ansprüche 1 bis 3, wobei das Mittel zum Melden von MDT-Messungen so konfiguriert ist, dass es mit dem Melden von MDT-Messungen teilweise als Reaktion darauf beginnt, dass das Endgerät die Vielzahl von Abdeckungsgebieten gleichzeitig erkennt.

5. Endgerät nach einem der vorstehenden Ansprüche, wobei ein Abdeckungsgebiet als durch das Endgerät erkannt bestimmt wird, wenn eine Qualitätsmetrik eines innerhalb des Abdeckungsgebiets übertragenen Referenzsignals als über einem vorgegebenen Schwellenwert liegend gemessen wird.

6. Endgerät nach einem der vorstehenden Ansprüche, wobei die Abdeckungsinformationen mindestens eines der folgenden Elemente umfassen: eine Vielzahl von Zellenkennungen und eine Vielzahl von Strahlkennungen.

7. Endgerät nach einem der vorstehenden Ansprüche, wobei das Endgerät ferner Mittel zum Einstellen einer Häufigkeit von MDT-Messungen teilweise basierend auf den Konfigurationsinformationen umfasst.

8. Endgerät nach einem der vorstehenden Ansprüche, wobei die Konfigurationsinformationen Zeitinformationen umfassen, die eine Messdauerperiode für MDT-Messungen angeben; und
wobei das Endgerät ferner Mittel zum Durchführen von MDT-Messungen während der Messdauerperiode umfasst.

9. Endgerät nach einem der vorstehenden Ansprüche, wobei die Konfigurationsinformationen Zeitinformationen umfassen, die eine Erkennungsdauerperiode angeben, während der die Abdeckungsgebiete gleichzeitig oder nacheinander erkannt werden sollen; und
wobei das Mittel zum Melden von MDT-Messungen so konfiguriert ist, dass es MDT-Messungen teilweise basierend darauf meldet, dass das Endgerät die Abdeckungsgebiete gleichzeitig oder nacheinander während der Erkennungsdauerperiode erkennt.

10. Endgerät nach einem der vorstehenden Ansprüche, wobei die gemeldeten MDT-Messungen GNSS-basierte (Global Navigation Satellite System) Standorte des Endgeräts umfassen.

11. Endgerät nach einem der vorstehenden Ansprüche, wobei die gemeldeten MDT-Messungen nach und/oder vor der gleichzeitigen oder aufeinanderfolgenden Erkennung der Abdeckungsgebiete durch das Endgerät durchgeführt werden.

12. Verfahren (200), das durch ein Endgerät (User Equipment, UE) (110) durchgeführt wird, umfassend:
Empfangen (201), an dem Endgerät (User Equipment, UE) (110), von Konfigurationsinformationen von einem Knoten eines Funkzugangsnetzes (Radio Access Network, RAN) (120) zum Konfigurieren des Endgeräts zur Durchführen Minimization of Driving Test-Messungen (MDT-Messungen), wobei die Konfigurationsinformationen umfassen:
Abdeckungsinformationen zum Angeben einer Vielzahl von Abdeckungsgebieten in dem RAN, und
Auslöseinformationen, die angeben, ob die Meldung von MDT-Messungen teilweise basierend darauf ausgelöst werden soll, ob die Abdeckungsgebiete der Vielzahl von Abdeckungsgebieten durch das Endgerät:
nacheinander in einer vorgegebenen Reihenfolge, oder
gleichzeitig erkannt werden; und
Melden (202) von MDT-Messungen teilweise basierend auf den Konfigurationsinformationen.

13. Computerprogrammanweisungen, die durch ein Endgerät (User Equipment, UE) (110) auszuführen sind, um das Endgerät (User Equipment, UE) (110) zu veranlassen zum:
Empfangen von Konfigurationsinformationen von einem Knoten eines Funkzugangsnetzes (Radio Access Network, RAN) (120) zum Konfigurieren des Endgeräts zur Durchführung von Minimizing of Driving Test-Messungen (MDT-Messungen), wobei die Konfigurationsinformationen umfassen:
Abdeckungsinformationen zum Angeben einer Vielzahl von Abdeckungsgebieten in dem RAN, und
Auslöseinformationen, die angeben, ob die Meldung von MDT-Messungen teilweise basierend darauf ausgelöst werden soll, ob die Abdeckungsgebiete der Vielzahl von Abdeckungsgebieten durch das Endgerät:
nacheinander in einer vorgegebenen Reihenfolge, oder
gleichzeitig erkannt werden; und
Melden von MDT-Messungen teilweise basierend auf den Konfigurationsinformationen.

14. Funkzugangsnetz (Radio Access Network, RAN) (120) umfassend:
Mittel zum Senden (405), an ein Endgerät (User Equipment, UE) (110), von Konfigurationsinformationen zum Konfigurieren des Endgeräts zur Durchführung von Minimizing of Driving Test-Messungen (MDT-Messungen), wobei die Konfigurationsinformationen umfassen:
Abdeckungsinformationen zum Angeben einer Vielzahl von Abdeckungsgebieten in dem RAN; und
Auslöseinformationen, die angeben, ob die Meldung von MDT-Messungen teilweise basierend darauf ausgelöst werden soll, ob die Abdeckungsgebiete der Vielzahl von Abdeckungsgebieten durch das Endgerät:
nacheinander in einer vorgegebenen Reihenfolge, oder
gleichzeitig erkannt werden.

15. Verfahren (300), das durch einen Knoten eines Funkzugangsnetzes (Radio Access Network, RAN) (120) durchgeführt wird, umfassend:
Senden (301), von dem Knoten eines Funkzugangsnetzes (Radio Access Network, RAN) (120), von Konfigurationsinformationen an ein Endgerät (User Equipment, UE) (110) zum Konfigurieren des Endgeräts zur Durchführung von Minimizing of Driving Test-Messungen (MDT-Messungen), wobei die Konfigurationsinformationen umfassen:
Abdeckungsinformationen zum Angeben einer Vielzahl von Abdeckungsgebieten in dem RAN; und
Auslöseinformationen, die angeben, ob die Meldung von MDT-Messungen teilweise basierend darauf ausgelöst werden soll, ob die Abdeckungsgebiete der Vielzahl von Abdeckungsgebieten durch das Endgerät:
nacheinander in einer vorgegebenen Reihenfolge, oder
gleichzeitig erkannt werden.

## Revendications

1. Équipement utilisateur, UE, (110) comprenant :
des moyens pour recevoir (405) d'un nœud d'un réseau d'accès radio, RAN, (120) des informations de configuration pour configurer l'UE pour qu'il effectue des mesures de minimisation de test de commande, dans lequel les informations de configuration comprennent :
des informations de couverture pour indiquer une pluralité de zones de couverture dans le RAN, et
des informations de déclenchement pour indiquer si le rapport de mesures MDT doit être déclenché, en partie selon que des zones de couverture de la pluralité de zones de couverture sont détectées ou non par l'UE :
séquentiellement dans un ordre donné, ou
simultanément ; et
des moyens pour rapporter des mesures MDT en se basant au moins en partie sur les informations de configuration.

2. UE selon la revendication 1, dans lequel les moyens pour rapporter des mesures MDT sont configurés pour commencer à rapporter les mesures MDT en se basant au moins en partie sur la détection séquentielle par l'UE de la pluralité de zones de couverture dans un ordre qui correspond à l'ordre donné.

3. UE selon la revendication 2, dans lequel une zone de couverture est déterminée comme étant détectée par l'UE si l'UE sélectionne une cellule associée à la zone de couverture respective comme cellule de desserte.

4. UE selon l'une des revendications 1 à 3, dans lequel les moyens pour rapporter des mesures MDT sont configurés pour commencer à rapporter les mesures MDT en se basant au moins en partie sur la détection simultanée par l'UE de la pluralité de zones de couverture.

5. UE selon l'une des revendications précédentes, dans lequel une zone de couverture est déterminée comme étant détectée par l'UE lorsqu'une métrique de qualité d'un signal de référence transmis dans la zone de couverture est mesurée comme dépassant un seuil donné.

6. UE selon l'une des revendications précédentes, dans lequel les informations de couverture comprennent au moins une pluralité d'identifiants parmi : une pluralité d'identifiants de cellule et une pluralité d'identifiants de faisceau.

7. UE selon l'une des revendications précédentes, dans lequel l'UE comprend en outre des moyens pour ajuster une fréquence de mesures MDT en se basant au moins en partie sur les informations de configuration.

8. UE selon l'une des revendications précédentes, dans lequel les informations de configuration comprennent des informations temporelles indicatives d'une période de durée de mesure pour les mesures MDT ; et
dans lequel l'UE en comprend outre des moyens pour effectuer des mesures MDT au cours de la période de durée de mesure.

9. UE selon l'une des revendications précédentes, dans lequel les informations de configuration comprennent des informations temporelles indicatives d'une période de durée de détection au cours de laquelle les zones de couverture doivent être détectées simultanément ou en séquence ; et
dans lequel les moyens pour rapporter des mesures MDT sont configurés pour rapporter des mesures MDT en se basant au moins en partie sur la détection par l'UE des zones de couverture simultanément ou en séquence au cours de la période de durée de détection.

10. UE selon l'une des revendications précédentes, dans lequel les mesures MDT rapportées comprennent des localisations basées sur le système mondial de navigation par satellite, GNSS, de l'UE.

11. UE selon l'une des revendications précédentes, dans lequel les mesures MDT rapportées sont effectuées après et/ou avant que l'UE ne détecte les zones de couverture simultanément ou en séquence.

12. Procédé (200) exécuté par un équipement utilisateur, UE, (110), comprenant les étapes suivantes :
au niveau de l'équipement utilisateur, UE, (110), recevoir (201) d'un nœud d'un réseau d'accès radio, RAN, (120) des informations de configuration pour configurer l'UE pour qu'il effectue des mesures de minimisation de test de commande, dans lequel les informations de configuration comprennent :
des informations de couverture pour indiquer une pluralité de zones de couverture dans le RAN, et
des informations de déclenchement pour indiquer si le rapport de mesures MDT doit être déclenché, en partie selon que des zones de couverture de la pluralité de zones de couverture sont détectées ou non par l'UE :
séquentiellement dans un ordre donné, ou
simultanément ; et
rapporter (202) des mesures MDT en se basant au moins en partie sur les informations de configuration.

13. Instructions de programme informatique à exécuter par un équipement utilisateur, UE, (110), pour amener l'équipement utilisateur, UE, (110) à effectuer ce qui :
recevoir d'un nœud d'un réseau d'accès radio, RAN, (120) des informations de configuration pour configurer l'UE pour qu'il effectue des mesures de minimisation de test de commande, dans lesquelles les informations de configuration comprennent :
des informations de couverture pour indiquer une pluralité de zones de couverture dans le RAN, et
des informations de déclenchement pour indiquer si le rapport de mesures MDT doit être déclenché, en partie selon que des zones de couverture de la pluralité de zones de couverture sont détectées ou non par l'UE :
séquentiellement dans un ordre donné, ou
simultanément ; et
rapporter des mesures MDT en se basant au moins en partie sur les informations de configuration.

14. Nœud de réseau d'accès radio, RAN, (120) comprenant :
des moyens pour envoyer (405) à un équipement utilisateur, UE, (110) des informations de configuration pour configurer l'UE pour qu'il effectue des mesures de minimisation de test de commande, dans lequel les informations de configuration comprennent :
des informations de couverture pour indiquer une pluralité de zones de couverture dans le RAN ; et
des informations de déclenchement pour indiquer si le rapport de mesures MDT doit être déclenché, en partie selon que des zones de couverture de la pluralité de zones de couverture sont détectées ou non par l'UE :
séquentiellement dans un ordre donné, ou
simultanément.

15. Procédé (300) exécuté par un nœud de réseau d'accès radio, RAN, (120) comprenant les étapes suivantes :
envoyer (301), du nœud d'un réseau d'accès radio, RAN, (120) à un équipement utilisateur, UE, (110) des informations de configuration pour configurer l'UE pour qu'il effectue des mesures de minimisation de test de commande, dans lequel les informations de configuration comprennent :
des informations de couverture pour indiquer une pluralité de zones de couverture dans le RAN ; et
des informations de déclenchement pour indiquer si le rapport de mesures MDT doit être déclenché, en partie selon que des zones de couverture de la pluralité de zones de couverture sont détectées ou non par l'UE :
séquentiellement dans un ordre donné, ou
simultanément.
